# FASCICULE DE BREVET EUROPEEN

(11) **EP 4 600 195 B1**
(45) Date de publication et mention de la délivrance du brevet: **29.07.2026**
(21) Numéro de dépôt: 24307238.6
(22) Date de dépôt: 20.12.2024
(51) Int. Cl.: B65H 75/22, B65H 75/24

(54) **TOURET À GÉOMÉTRIE VARIABLE**
TROMMEL MIT VARIABLER GEOMETRIE
DRUM WITH VARIABLE GEOMETRY

(30) Priorité: 09.02.2024 FR 2401288; 17.04.2024 FR 2403997
(43) Date de publication de la demande: 13.08.2025
(73) Titulaire: Nexans, 92400 Courbevoie (FR)
(72) Inventeur: DEMULE, Christophe, 92400 Courbevoie (FR); DELWAL, Fabien, 92400 Courbevoie (FR); GALLACIO, Marie-Eva, 92400 Courbevoie (FR)
(74) Mandataire: Cabinet Boettcher

(56) Documents cités:
- DE-U1- 202013 101 355
- FR-B1- 2 848 198

## Description

### Domaine technique

L'invention concerne un touret destiné à l'enroulement d'un câble, en particulier d'un câble électrique. Le touret est en particulier destiné à accueillir un câble pré-enroulé sous la forme d'une couronne. L'invention concerne aussi une bobine comportant un touret selon l'invention et un câble enroulé sur le touret. Elle concerne enfin un procédé pour modifier la surface d'enroulement d'un touret selon l'invention.

### Art antérieur

Un touret est une bobine sur laquelle un câble est enroulé avant d'être utilisé. Le touret doit être adapté au diamètre et à la longueur du câble, ce qui impose de disposer de plusieurs tourets pour enrouler différents câbles.

Le touret facilite le déroulement du câble. Pour encore faciliter ce déroulement, le touret peut être monté sur un enrouleur.

Le document FR 2 848 198 B1 décrit un touret doté d'un demi-moyeu réversible, selon le préambule de la revendication 1.

Il existe un besoin permanent pour une solution permettant l'enroulement de différents câbles, de manière compacte et pratique.

Un but de l'invention et de répondre, au moins partiellement, à ce besoin.

### Résumé de l'invention

L'invention propose un touret selon la revendication indépendante 1, comportant un fût d'axe X et deux flasques latéraux qui, dans
une position assemblée du touret, sont fixés coaxialement audit fût, chaque flasque latéral comportant une joue s'étendant sensiblement perpendiculairement à l'axe X dans ladite position assemblée, les joues des deux flasques latéraux délimitant une surface d'enroulement pour un câble,
au moins un desdits flasques latéraux, dit « flasque réversible », étant assemblable sur un tronçon d'extrémité du fût selon des première et deuxième configurations dans lesquelles la position de la joue dudit flasque réversible, le long de l'axe X, est différente,
le passage de la première configuration à la deuxième configuration incluant un retournement du flasque réversible,
le touret comportant une butée de verrouillage qui est fixée à travers le flasque, dans les premières et deuxièmes configurations, sur le fût pour maintenir le flasque réversible immobile axialement sur le fût, ledit flasque réversible étant pris en sandwich entre une butée formée par le fût et la butée de verrouillage.

Dans les première et deuxième configurations, la surface d'enroulement présente ainsi des première et deuxième longueurs, mesurées selon l'axe X, ou « voies », différentes, respectivement.

Comme on le verra plus en détail dans la suite de la description, le changement de configuration permet de modifier la longueur de la surface d'enroulement. Le touret peut être ainsi facilement adapté à différentes longueurs ou diamètres de câble.

Un retournement du flasque réversible modifie la position de sa joue le long de l'axe X, la joue étant par exemple plus éloignée du centre du fût dans la première configuration que dans la deuxième configuration, le long de l'axe X. Cette modification de la position de la joue modifie ainsi le volume disponible pour l'enroulement du câble.

Autrement dit, des premier et deuxième volumes différents sont avantageusement ménagés pour l'enroulement du câble, entre les deux flasques latéraux, dans les première et deuxième configurations, respectivement.

Par « retournement du flasque réversible », on entend que le flasque réversible est tourné de 180° autour d'un axe radial par rapport à l'axe X. Autrement dit, le flasque réversible est orienté suivant un premier sens dans la première configuration, et suivant un deuxième sens, opposé au premier sens, dans la deuxième configuration. Le flasque réversible peut donc être retourné et être fixé sur le fût en étant orienté dans un sens ou dans l'autre. Avantageusement, un simple retournement du flasque réversible suffit à modifier la capacité du touret.

De préférence, le flasque réversible comporte un manchon d'axe X, dans lequel le tronçon d'extrémité du fût est partiellement logé dans les première et deuxième configurations, la surface extérieure du manchon définissant au moins partiellement la surface d'enroulement dans la première configuration ou dans la deuxième configuration.

De préférence, le fût et le manchon sont conformés de manière que, dans la première configuration et/ou dans la deuxième configuration, le tronçon d'extrémité du fût soit partiellement logé dans une cavité au moins partiellement de même forme définie par le manchon.

Dans un mode de réalisation, le tronçon d'extrémité du fût comporte une butée axiale contre laquelle des première et deuxième extrémités axiales du manchon sont en butée axiale dans les première et deuxième configurations, respectivement. La joue est décalée axialement par rapport à un plan transversal médian du flasque, c'est-à-dire perpendiculaire à l'axe X et à mi-longueur du flasque. Autrement dit, la joue n'est pas positionnée à mi-longueur du flasque réversible.

Ce mode de réalisation est avantageusement particulièrement simple.

De préférence, le tronçon d'extrémité du fût définit une surface extérieure s'étendant selon une enveloppe de fût présentant la forme d'un cône d'axe X dont le sommet est du côté opposé au plan transversal médian du fût par rapport au tronçon d'extrémité du fût, et le manchon présente une surface intérieure conformée de manière à s'étendre selon ladite enveloppe de fût dans les première et deuxième configurations.

Avantageusement, la forme conique de l'interface d'appui du manchon sur le fût permet de réaliser ladite butée axiale, tout en limitant considérablement le jeu entre ces pièces.

Dans un mode de réalisation préféré, la surface extérieure du tronçon d'extrémité du fût définit une pluralité de zones élémentaires de fût s'étendant selon ladite enveloppe de fût et régulièrement répartis autour de l'axe X, et
le manchon définit une pluralité de premières zones élémentaires de manchon et une pluralité de deuxièmes zones élémentaires de manchon, chaque première zone élémentaire de manchon étant configurée pour prendre appui sur une zone élémentaire de fût respective dans la première configuration, chaque deuxième zone élémentaire de manchon étant configurée pour prendre appui sur une zone élémentaire de fût respective dans la deuxième configuration. Les formes des zones élémentaires de fût, des premières zone élémentaires de manchon et des deuxièmes zone élémentaires de manchon sont de préférence identiques de manière à assurer un contact étroit entre le manchon et le tronçon d'extrémité du fût dans les première et deuxième configurations.

De préférence encore, dans la première configuration, aucune deuxième zone élémentaire de manchon ne prend appui sur une zone élémentaire de fût, et dans la deuxième configuration, aucune première zone élémentaire de manchon ne prend appui sur une zone élémentaire de fût. En particulier, de préférence, les premières et deuxièmes zones élémentaires de manchon se succèdent, en alternance, autour de l'axe du manchon, confondu avec l'axe X dans la position assemblée.

Selon l'invention, le touret comporte une butée de verrouillage qui, dans les première et deuxième configurations, est fixée sur le fût et, de préférence, prend appui sur des deuxième et première extrémité du manchon, respectivement, de manière que selon l'invention, en coopération avec le fût, le flasque réversible soit maintenu immobile axialement sur le fût.

De préférence, la butée de verrouillage comporte un clips de fixation sur le fût, de préférence un clips désactivable par une pression manuelle, de préférence au moyen d'un pouce d'une main d'un utilisateur.

En particulier, la butée de verrouillage comporte, dans un mode de réalisation préféré :
- une griffe qui, dans les première et deuxième configurations, est insérée élastiquement dans un logement correspondant du fût, et
- un bouton couplé à la griffe de manière qu'une pression manuelle sur ledit bouton dégage ladite griffe dudit logement.

De préférence, le touret comporte des moyens de fixation permanente de ladite butée de verrouillage sur le flasque réversible.

Dans un mode de réalisation préféré, le touret comporte une butée de verrouillage fixée de manière permanente sur le fût, de préférence démontable, et qui, dans les première et deuxième configurations, est fixée de manière désactivable sur le flasque réversible, de préférence par clipsage, de manière à retenir le flasque réversible immobile axialement sur le fût.

De préférence, la butée de verrouillage comporte un connecteur adapté à l'accouplement à un dérouleur.

Avantageusement, la butée de verrouillage a ainsi une fonction d'immobilisation du flasque réversible sur le fût et une fonction d'accouplement à un dérouleur.

Dans un mode de réalisation, au moins un des flasques, de préférence chaque flasque définit une poignée, de préférence sous la forme d'une cavité, traversant le flasque ou non, adaptée à l'insertion d'une main d'un utilisateur.

Avantageusement, le flasque peut être facilement manipulé et transporté.

De préférence encore, un flasque, de préférence chaque flasque, comporte un pare-chocs périphérique, de préférence sous la forme d'un repli du bord périphérique sur lui-même.

De préférence, le touret comporte un ressort configuré de manière à repousser le flasque réversible, le long de l'axe X, de manière à l'écarter du plan transversal médian du fût, dans au moins une, de préférence dans chacune des première et deuxième configurations.

Le ressort est de préférence un ressort à lame. En particulier, il peut être venu de matière avec le fût.

La compression du ressort dans ladite au moins une, de préférence dans chacune des première et deuxième configurations, est contrariée par l'immobilisation du flasque réversible sur le fût. Le ressort contribue ainsi avantageusement à l'immobilisation du flasque réversible. En outre, lorsque les moyens d'immobilisation sont désactivés, le ressort se détend et repousse le flasque amovible. Le démontage en est facilité. En particulier, lorsque le flasque réversible est fixé sur le fût au moyen d'un clips, l'appui sur le clips peut avantageusement provoquer l'éjection du flasque amovible.

De préférence enfin, chacun des flasques est un flasque réversible.

Avantageusement, le touret peut ainsi se présenter, dans la position assemblée, sous trois configurations correspondant chacune à une voie, selon que les deux flasques sont orientés dans le premier sens, les deux flasques sont orientés dans le deuxième ou les deux flasques sont orientés dans des sens opposés.

De préférence, les deux flasques latéraux sont identiques.

Avantageusement, l'assemblage du touret en est facilité. Les coûts de fabrication sont également réduits.

De préférence, le fût présente à chacune de ses extrémités une interface comportant une zone de contact de forme circulaire et une surface extérieure de forme circulaire.

De préférence, la zone de contact comporte un épaulement ininterrompu sur toute la circonférence d'un cercle.

L'invention porte également sur un dévidoir comportant un dérouleur et un touret selon l'invention monté sur le dérouleur, l'accouplement du flasque amovible du touret étant de préférence et selon la configuration du flasque amovible, sélectivement réalisé au moyen d'un connecteur de ladite butée de verrouillage ou sur le fût.

L'invention porte également sur un procédé selon la revendication indépendante 17, pour modifier la surface d'enroulement d'un touret selon l'invention, le procédé comportant les étapes suivantes :
1) démontage d'un dit flasque réversible disposé dans une dite première configuration, c'est-à-dire orienté suivant un premier sens ;
2) retournement du flasque réversible et remontage du flasque réversible sur le fût dans une dite deuxième configuration, c'est-à-dire en l'orientant suivant un deuxième sens, opposé au premier sens.

L'invention porte également sur un système de verrouillage pour un touret tel que succinctement décrit ci-dessus, dans lequel le fût est constitué par l'assemblage de deux demi-fûts, le système de verrouillage étant remarquable en ce qu'il comporte :
- un demi-fût ;
- un flasque latéral, fixé coaxialement au demi-fût de façon démontable ;
- au moins un clip de verrouillage, intégré au demi-fût ou rapporté sur le demi-fût ; et
- au moins un ressort intégré au demi-fût ou rapporté sur le demi-fût, le ressort étant adapté à maintenir le flasque fixé sur le fût et à faciliter le démontage du flasque.

Dans un mode de réalisation, le clip de verrouillage comporte un bouton et une patte.

Dans un mode de réalisation, le ressort présente la forme d'une lame s'étendant circonférentiellement et présentant une protrusion axiale.

### Brève description des figures

D'autres caractéristiques et avantages de l'invention apparaitront encore à l'examen de la description qui va suivre et au regard du dessin annexé dans lequel :
- la figure 1 [Fig 1] représente, en perspective, un touret selon l'invention dans la première configuration ;
- la figure 2 [Fig 2] représente, en perspective, le touret de la figure 1 dans la deuxième configuration ;
- la figure 3 [Fig 3] illustre les trois configurations possibles lorsque les deux flasques sont réversibles ;
- la figure 4 [Fig 4] représente, en vue éclatée, un touret selon l'invention qui diffère de celui de la figure 1 par les butées de verrouillage utilisées ;
- la figure 5 [Fig 5] représente, de manière très schématique, la surface intérieure du manchon dans un mode de réalisation préféré ;
- la figure 6 [Fig 6] représente, de manière très schématique, la surface extérieure d'un tronçon de fût adapté au manchon dont la surface est représentée sur la figure 5 ;
- la figure 7 [Fig 7] représente, de manière très schématique, l'assemblage du manchon dont la surface est représentée sur la figure 5 sur la surface extérieure du tronçon de fût représenté sur la figure 6 ;
- la figure 8 [Fig 8] illustre le montage d'un flasque amovible dans un mode de réalisation préféré ;
- la figure 9 [Fig 9] illustre le montage d'un clip de verrouillage de façon démontable sur le fût, dans un mode de réalisation préféré ;
- la figure 10 [Fig 10] est une vue de dessus d'un demi-fût sur lequel sont montés deux clips de verrouillage, dans un mode de réalisation préféré ;
- la figure 11 [Fig 11] est une vue de détail du montage du clip de verrouillage sur le demi-fût ; et
- la figure 12 [Fig 12] est une vue de dessus d'une extrémité du fût, dans un mode de réalisation préféré.

### Définitions

Dans un souci de clarté, et sauf indication contraire, « horizontal » et « vertical », « supérieur » et « inférieur », « au-dessus » et « en dessous », « haut » et « bas », font référence à une position dans laquelle l'axe X du touret est à l'horizontal. Il en est de même de la « hauteur », mesurée selon la direction verticale. Sauf indication contraire, la « longueur » est mesurée selon l'axe X.

Sauf indication contraire, « axial » fait référence à l'axe X. Une butée axiale d'une pièce sur une autre bloque le déplacement de cette pièce, dans un sens, le long de l'axe X. Les extrémités axiales d'une pièce sont les extrémités de cette pièce selon l'axe X.

« Radialement » fait également référence à l'axe X, sauf indication contraire.

Un plan « transversal » est un plan perpendiculaire à l'axe X, sauf indication contraire. Le plan transversal médian du fût passe à mi-longueur du fût. Le centre du fût est à mi-longueur du fût.

On considère qu'une joue s'étend « sensiblement perpendiculairement » à l'axe X dans la position assemblée lorsque l'angle entre le plan général de la joue et l'axe X est compris entre 80 et 110°. De préférence, cet angle est de 90°.

Une position assemblée est une position dans laquelle le touret est opérationnel, c'est-à-dire dans laquelle les deux flasques sont fixés sur le fût.

Sauf indication contraire, « fixer » implique une fixation rigide. Une fixation rigide peut être désactivable, en particulier pour qu'une pièce fixée soit amovible.

La butée de verrouillage est fixée « de manière permanente » sur le fût ou sur le flasque lorsqu'elle est fixée, sur le fût ou sur le flasque respectivement, dans la position assemblée du flasque réversible sur le fût, mais aussi lorsque le flasque réversible est désassemblé du fût. De préférence, la butée de verrouillage est cependant démontable pour être remplacée si elle casse.

Les moyens de fixation sont donc actifs au moins lorsque la butée de verrouillage est fixée sur le fût dans une des première et deuxième configurations et lorsque la butée de verrouillage n'est pas fixée sur le fût. De préférence, les moyens de fixation peuvent assurer ladite fixation, c'est-à-dire être actifs, sélectivement dans chacune des deux dites configurations.« Comporter » ou « comprendre » ou « présenter » doivent être interprétés de manière non limitative.

### Description détaillée

Les figures représentent un touret 10 selon l'invention, dans une position assemblée.

De préférence, le touret présente :
- une longueur L₁₀ supérieure à 5 cm, de préférence supérieure à 10 cm ou à 20 cm, et/ou inférieure à 50 cm, et/ou
- une hauteur h₁₀ supérieure à 20 cm, de préférence supérieure à 30 cm ou à 40 cm, et/ou inférieure à 100 cm.

Ce touret représenté est constitué d'un fût 12, de flasques réversibles droit et gauche, collectivement appelés « flasques latéraux » 14, et de butées de verrouillage 16 droite et gauche. Toutes ces pièces sont de préférence en une matière plastique, ce qui confère avantageusement de la légèreté et une bonne robustesse.

Dans la position assemblée du touret, le fût et les flasques sont coaxiaux, alignés selon un axe X.

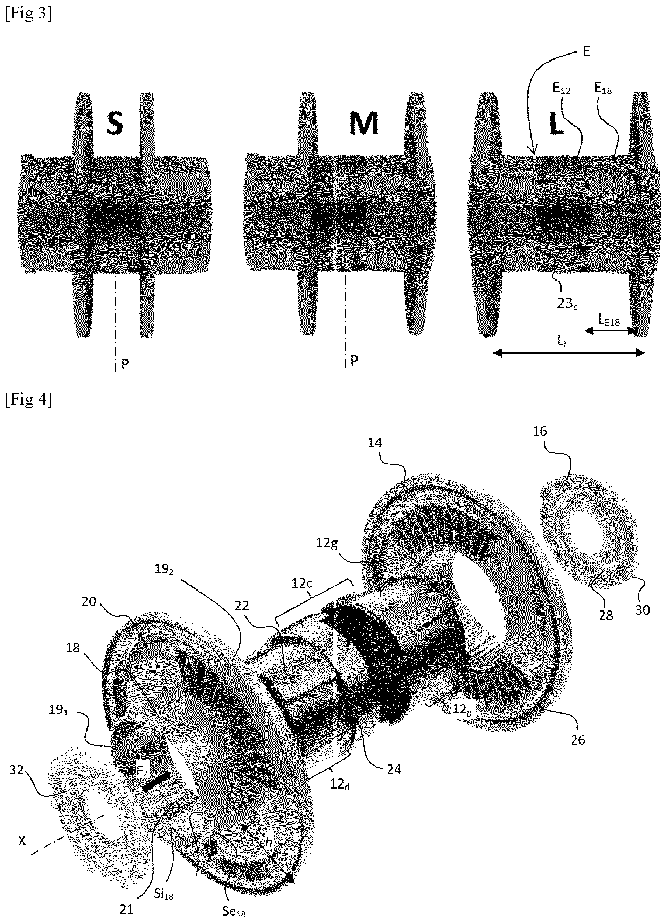

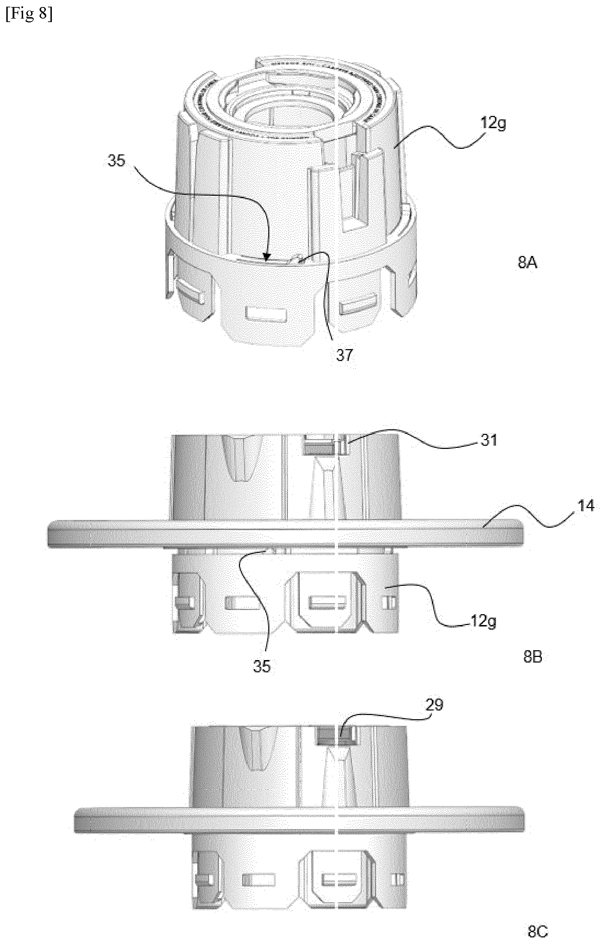

Le fût peut être monobloc. Il est de préférence constitué par l'assemblage de deux demi-fûts droit et gauche (voir figure 4 ; un demi-fût est également représenté sur la figure 8), qui définissent
- des tronçons d'extrémités droit 12d et gauche 12g, respectivement, de préférence de même forme extérieure, recevant les flasques droit et gauche, respectivement, et
- un tronçon central 12c définissant au moins partiellement une surface d'enroulement E, cylindrique de section circulaire.

Dans un mode de réalisation préféré, les deux flasques sont identiques. Avantageusement, les coûts de fabrication en sont réduits. Par ailleurs, le montage en est facilité, chaque flasque pouvant être indifféremment monté sur le tronçon d'extrémité droit du fût ou sur le tronçon d'extrémité gauche du fût.

Dans un mode de réalisation préféré, les deux butées de verrouillage sont également identiques.

Dans la suite de la description, seul un des deux flasques et seule une des deux butées de verrouillage est donc décrite.

Chaque flasque 14 comporte :
- un manchon 18 creux, d'axe X, le volume délimité par la surface intérieure du manchon, ou « lumière », débouchant à des première et deuxième extrémités axiales, référencées 19₁ et 19₂ respectivement, par des première et deuxième ouvertures, respectivement, de préférence de mêmes dimensions ;
- une joue 20 s'étendant radialement, de préférence à une des première et deuxième extrémités axiales 19₁ et 19₂ du manchon, en l'occurrence, sur la figure 4, à la deuxième extrémité 19₂ du manchon.

Dans le mode de réalisation représenté, le manchon présente
- une surface intérieure Si₁₈ adaptée pour un montage sur un tronçon d'extrémité du fût, de préférence sur l'un quelconque des tronçons d'extrémité du fût, dans chacune des première ou deuxième configurations, et
- une surface extérieure Se₁₈ généralement cylindrique de section circulaire, destinée à définir, au moins partiellement la surface d'enroulement E dans une des première et deuxième configurations.

Pour qu'un tronçon d'extrémité du fût puisse être inséré dans le manchon par l'une quelconque des deux ouvertures du manchon, pour sélectivement atteindre la première configuration et la deuxième configuration, la surface intérieure Si₁₈ peut être cylindrique, par exemple de section circulaire, d'axe X, et sensiblement identique à la surface extérieure du tronçon d'extrémité du fût.

De préférence pour chaque tronçon d'extrémité, le fût définit de préférence un épaulement constituant une butée axiale limitant le déplacement, vers le plan transversal médian P du fût, du manchon fixé sur un tronçon d'extrémité. L'épaulement peut être en particulier à la transition entre le tronçon central du fût et ledit tronçon d'extrémité. L'épaulement est de préférence un épaulement annulaire d'axe X, s'étendant de préférence tout autour de l'axe X, de préférence radialement.

Une surface intérieure Si₁₈ cylindrique d'axe X conduit cependant, dans la position assemblée du touret à un jeu fonctionnel entre le flasque réversible et le tronçon d'extrémité du fût sur lequel le flasque est monté. Il en résulte une usure accélérée. La fabrication du manchon par moulage de matière plastique est également délicate, faute d'angle de dépouille.

De préférence, la surface intérieure Si₁₈ et la surface extérieure Se₁₂ du tronçon d'extrémité du fût sont conçues de manière que, dans la position assemblée, elles soient en appui l'une sur l'autre selon une interface d'appui conique, c'est-à-dire s'étendant selon une enveloppe de fût C en forme de cône d'axe X, le sommet du cône étant du côté opposé au fût par rapport au flasque. Un tel appui peut être qualifié « d'appui conique ».

De préférence, le tronçon d'extrémité du fût comporte des dents de fût 22 radiales, régulièrement réparties autour de l'axe X et définissant ladite interface d'appui conique.

Le tronçon d'extrémité du fût comporte de préférence plus de 3 et/ou moins de 9, de préférence moins de 7, de préférence moins de 5 des dents de fût. Les dents de fût sont de préférence toutes identiques. Elles sont séparées par des créneaux de fût 24.

La longueur circonférentielle des dents de fût, c'est-à-dire mesurée en suivant le contour extérieur du tronçon d'extrémité dans une coupe transversale, est de préférence sensiblement identique à la longueur circonférentielle des créneaux de fût. De préférence, ce contour extérieur présente ainsi une forme régulièrement crénelée, c'est-à-dire qui, s'il était déroulé, serait similaire à un signal carré.

Une dent de fût, de préférence chaque dent de fût, présente de préférence la même longueur circonférentielle, quel que soit le plan de coupe transversal considéré. Autrement dit, lorsqu'une dent de fût est observée radialement, elle présente de préférence une forme trapézoïdale, deux des côtés de cette forme se rapprochant l'un de l'autre lorsqu'on s'écarte du plan transversal médian du fût, du fait de la conicité.

La surface du tronçon d'extrémité qui définit ladite interface d'appui conique est ainsi constituée d'une pluralité de zones de fût élémentaires Z identiques, régulièrement réparties à la périphérie du tronçon d'extrémité, et présentant une forme générale trapézoïdale lorsqu'elles sont observées radialement.

La surface intérieure Si₁₈ du manchon définit, pour chaque zone de fût élémentaire Z, des première et deuxième zones élémentaires de manchon Z₁ et Z₂ définissant ladite interface d'appui conique dans les première et deuxième configurations, respectivement. Les premières et deuxièmes zones élémentaires de manchon se succèdent à la circonférence du manchon autour de l'axe X.

Les premières zones élémentaires de manchon se succèdent à la surface d'une première enveloppe C₁ en forme de cône, et les deuxièmes zones élémentaires de manchon se succèdent à la surface d'une deuxième enveloppe C₂ en forme de cône, les première et deuxième enveloppes venant se confondre avec l'enveloppe de fût C dans les première et deuxième configurations, respectivement. La surface intérieure du manchon présente ainsi une « double conicité », les deux enveloppes coniques virtuelles C₁ et C₂ pointant l'une vers l'autre à la manière d'un diabolo, et s'interpénétrant.

Les demi-angles au sommet de l'enveloppe de fût C et des première et deuxième enveloppes coniques virtuelles C₁ et C₂ sont identiques et de préférence supérieur à 0,5°, de préférence supérieur à 1°, de préférence supérieur à 2°, et/ou inférieur à 20°, de préférence inférieur à 10°.

Toutes les premières zones élémentaires de manchon Z₁ sont de préférence identiques. Toutes les deuxièmes zones élémentaires de manchon Z₂ sont de préférence identiques.

Chaque première zone élémentaire de manchon est conformée de manière à être en appui sur une zone élémentaire de tronçon respective dans la première configuration, chaque deuxième zone élémentaire de manchon étant alors face à un créneau de fût.

Chaque deuxième zone élémentaire de manchon est conformée de manière à être en appui sur une zone élémentaire de tronçon respective dans la deuxième configuration, chaque première zone élémentaire de manchon étant alors face à un créneau de fût.

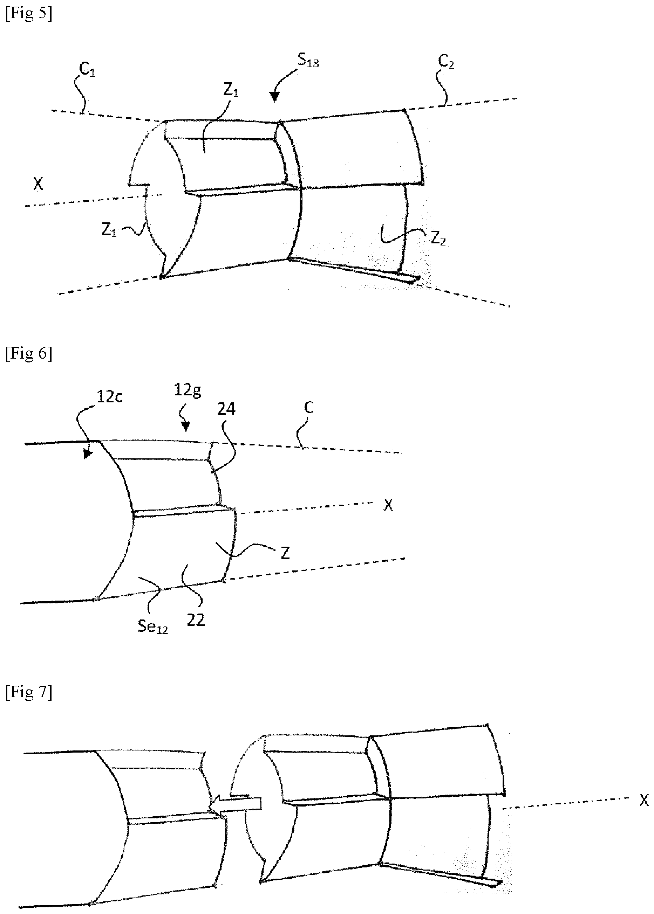

Les figures 5 et 6 illustrent, de manière très schématique, ce mode de réalisation préféré, dans la variante où le tronçon d'extrémité du fût ne comporte que deux dents de fût 22.

La figure 5 représente la surface intérieure du manchon (ce qui apparaît comme un creux est donc en saillie vers l'intérieur du manchon). Pour des raisons de clarté, cette surface a été dessinée comme si elle était opaque. On distingue en particulier les première et deuxième enveloppes coniques, référencées, C₁ et C₂, respectivement, et les premières et deuxièmes zones élémentaires de manchon, référencées Z₁ et Z₂, respectivement.

La figure 6 représente une partie de la surface extérieure du fût, et en particulier la surface extérieure du tronçon de fût 12g. On distingue l'enveloppe de fût C, conique d'axe X, et les zones élémentaires de fût Z.

La figure 7 illustre l'assemblage du flasque sur le tronçon de fût, cette représentation étant possible que la surface intérieure du manchon soit comme représentée sur la figure 5, ou qu'elle soit inversée, à condition de tourner le manchon d'un quart de tour autour de l'axe X.

Le manchon peut être ainsi en appui conique dans chaque des deux configurations. Lors du montage du manchon sur le fût l'orientation du manchon autour de l'axe X doit cependant être adaptée à la configuration choisie.

De préférence au moins une première zone de manchon élémentaire, de préférence chaque première zone de manchon élémentaire, et/ou au moins une deuxième zone de manchon élémentaire, de préférence chaque deuxième zone élémentaire de manchon présente(nt) une surface supérieure à 1 cm², de préférence supérieure à 5 cm² et/ou inférieure à 100 cm².

Dans un mode de réalisation, une, de préférence chaque première zone élémentaire de manchon, et/ou une, de préférence chaque deuxième zone élémentaire de manchon est/sont définie(s) par une pluralité de rampes 21 longitudinales.

Les formes des surface intérieure du manchon et surface extérieure d'un tronçon d'extrémité du fût, de préférence de chaque tronçon d'extrémité du fût, sont de préférence adaptées pour assurer un accouplement en rotation, autour de l'axe X, du manchon et du fût. En particulier, l'accouplement peut résulter, classiquement, d'une butée tangentielle entre une excroissance de matière à la surface extérieure du tronçon de fût et une cavité, ou une autre excroissance, à la surface intérieure du manchon, ou inversement.

La double conicité permet avantageusement de créer une telle butée tangentielle.

La joue 20 présente de préférence la forme d'une rondelle plate, c'est-à-dire d'une pièce discoïdale percée en son milieu, s'étendant radialement par rapport à l'axe X depuis la surface extérieure du manchon, la hauteur *h* de la rondelle, mesurée depuis la surface extérieure du manchon, étant de préférence supérieure à 5 cm et inférieure à 50 cm.

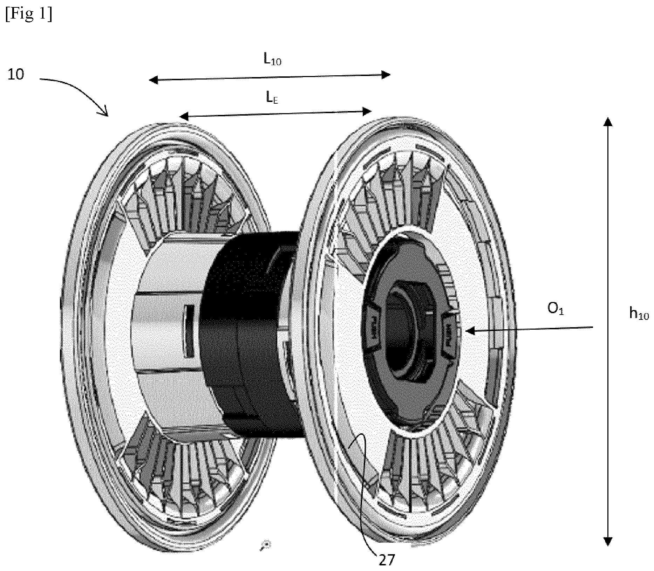

On appelle « surface d'enroulement » E la surface qui, dans la position assemblée du touret, illustrée sur les figures 1 à 4, s'étend entre les joues.

Dans un mode de réalisation illustré, la surface d'enroulement est partiellement définie par le tronçon central du fût (fraction E₁₂) et, en fonction de la configuration des flasques, par un ou les deux manchons des flasques réversibles (fraction E₁₈). La surface d'enroulement pourrait ne pas être définie, même partiellement, par le fût.

La surface d'enroulement est de préférence sensiblement lisse au toucher, et, de préférence de forme générale cylindrique, de préférence de section circulaire.

La longueur L_{E18} de la fraction E₁₈ est de préférence supérieure à 1 cm, de préférence supérieure à 2 cm, de préférence supérieure à 3 cm, et/ou inférieure à 20 cm, de préférence inférieure à 10 cm.

On appelle « voie » la longueur *L_{E}* de la surface d'enroulement, mesurée le long de l'axe X.

La surface extérieure Se₁₈ du manchon définit, au moins partiellement, la surface d'enroulement E dans une des configurations. Dans cette configuration, la longueur du manchon détermine la distance entre le plan transversal médian P du fût et la joue du flasque, et donc détermine la voie.

Pour qu'un retournement d'un flasque réversible puisse modifier la voie, la position de la joue, selon l'axe X, peut être quelconque, sauf à mi-longueur du flasque. De préférence, la joue est positionnée au niveau d'une des extrémités du manchon, c'est-à-dire que le manchon ne fait saillie que d'un côté de la joue.

Dans les première et deuxième configurations, un des tronçons d'extrémité du fût est inséré dans le manchon du flasque réversible. Avantageusement, le manchon contribue à la stabilité du flasque réversible sur le fût.

A sa périphérie, le bord périphérique de la joue d'un flasque est replié sur lui-même, de manière à former un pare-chocs 26. Le pare-chocs est adapté aux dimensions du touret et au câble qu'il reçoit. De préférence, il est conçu pour que le touret chargé de câble résiste, sans se déformer de manière plastique, à une chute de 1 mètre sur un sol en béton.

La périphérie de la joue d'un flasque peut également définir une cavité formant une poignée 27, dans laquelle un utilisateur peut introduire partiellement sa main pour saisir le flasque ou, après assemblage, le touret.

Les flasques réversibles sont amovibles, c'est-à-dire qu'ils peuvent être détachés du fût, de préférence manuellement, de préférence sans instrument.

Selon l'invention, chaque flasque réversible est fixé sur le fût en étant pris en sandwich entre une butée formée par le fût, du côté du plan transversal médian P, et une butée de verrouillage 16, elle-même fixée sur le fût, à travers le flasque.

La butée de verrouillage 16 peut immobiliser le flasque réversible sur le fût en s'appuyant simplement sur le flasque.

De préférence cependant, la butée de verrouillage est fixée sur le flasque réversible, de préférence de manière permanente, ce qui limite le risque de perte de la butée de verrouillage. La butée de verrouillage est de préférence clipsée sur le fût, au moins une griffe 28 de la butée de verrouillage venant de préférence s'insérer élastiquement dans un logement du fût, la désactivation du clips résultant de préférence d'une pression sur un bouton 30 actionnant la griffe de manière à la dégager de son logement.

Dans un mode de réalisation, la fixation de la butée de verrouillage sur le fût résulte de l'insertion d'un doigt dans un logement, de préférence d'un doigt de la butée de verrouillage dans un logement du fût. Le logement s'ouvre de préférence tangentiellement, c'est-à-dire que le doigt doit être déplacé en suivant la circonférence du fût, en particulier par rotation du flasque autour de l'axe X, pour entrer dans le logement.

La forme de la butée de verrouillage n'est pas limitée.

Dans un mode de réalisation, illustré sur les figures 3 et 4, la butée de verrouillage 16 présente de préférence la forme d'une platine, de préférence la forme d'une rondelle, ayant une faible épaisseur, de préférence inférieure à 10 mm, de préférence inférieure à 5 mm, et qui, dans les première et deuxième configurations, s'étend sensiblement radialement.

De préférence, vue de face, la butée de verrouillage 16 présente des dimensions sensiblement identiques à celle des ouvertures du manchon, de sorte que, dans la position assemblée du touret, elle obture sensiblement complètement une dite ouverture. Lorsqu'elle est fixée à l'extrémité du manchon qui porte la joue, elle s'étend de préférence sensiblement dans le prolongement de la joue, c'est-à-dire affleure du plan de la joue. Le risque d'accrochage lors de la manipulation du touret en est avantageusement limité.

Vue de face, la butée de verrouillage 16 présente de préférence une largeur et une hauteur supérieures à 20 mm, de préférence supérieures à 30 mm, de préférence supérieures à 50 mm, et/ou inférieures à 100 mm. Avantageusement, le risque de perdre la butée de verrouillage 16 est réduit.

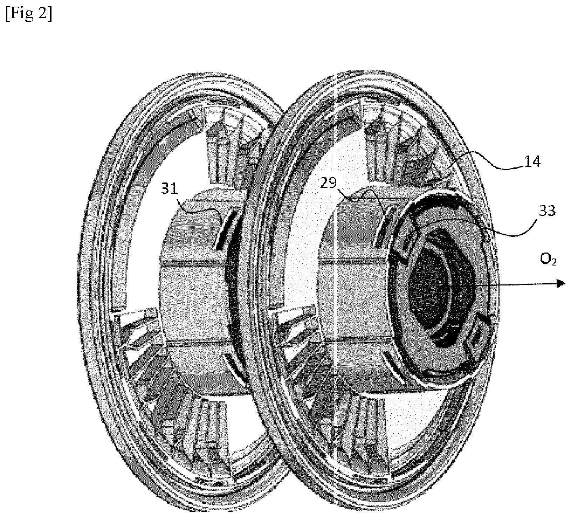

Dans un mode de réalisation, illustré sur les figures 1 et 2, la butée de verrouillage 16 est fixée sur le fût, de préférence de manière permanente, et vient se fixer sur le flasque, de préférence par clipsage. La butée de verrouillage ne peut donc être perdue.

De préférence, la butée de verrouillage 16, de préférence venue de matière avec le fût ou fixée de manière permanente sur le fût, vient se fixer sur le flasque réversible par insertion élastique de pattes 29 dans des logements 31 correspondants du flasque réversible. De préférence, le fût comporte, pour chaque patte 29, un bouton 33 pour dégager la patte de son logement et ainsi autoriser l'extraction du flasque réversible. L'ensemble formé par un bouton 33 et sa patte 29 associée est ci-après dénommé clip de verrouillage.

Dans un mode de réalisation, les clips de verrouillage 29, 33 peuvent être intégrés soit sur la butée de verrouillage, soit sur le fût 12.

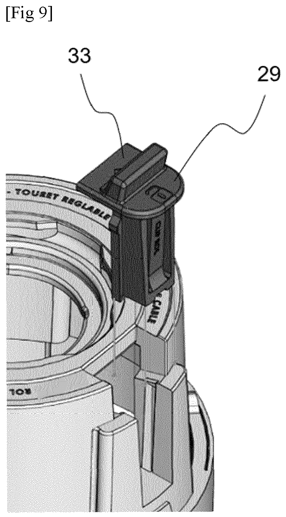

Dans un mode de réalisation préféré illustré sur la figure 9, les clips de verrouillage 29, 33 sont des pièces additionnelles indépendantes rapportées sur le fût 12, en étant fixées de façon démontable sur le fût 12, de sorte qu'elles peuvent être remplacées en cas de casse.

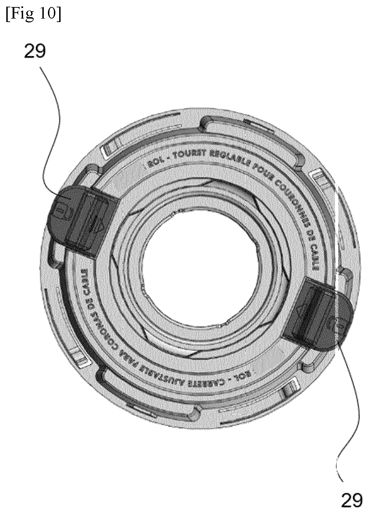

On peut par exemple implanter deux clips de verrouillage 29, 33 par demi-fût. Dans un mode de réalisation préféré illustré sur la figure 10, les deux clips de verrouillage 29, 33 sont disposés de façon diamétralement opposée sur chaque demi-fût.

Une fois monté sur le demi-fût, chaque clip de verrouillage 29, 33 est en butée contre ce demi-fût, ce qui permet d'éviter que le clip saute sous la pression du câble ou lors d'une mauvaise manipulation.

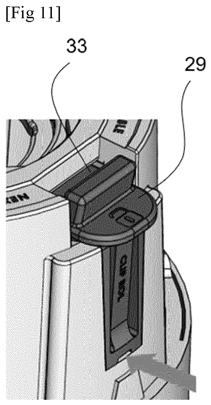

Dans un mode de réalisation préféré illustré sur la figure 11, le démontage des clips de verrouillage 29, 33 est effectué sans danger grâce à une fenêtre (repérée par la flèche sur le dessin) permettant d'introduire superficiellement un tournevis ou tout autre outil similaire sans risque de perforation qui pourrait blesser l'utilisateur.

Dans un mode de réalisation préféré, un ressort 35 (figure 8) s'oppose à la progression du flasque le long de l'axe X à la fin de l'insertion du flasque sur le fût. L'opérateur doit donc pousser le flasque, suivant l'axe X, pour contrer l'action du ressort avant de pouvoir activer le verrouillage, par exemple insérer le doigt ou la patte 29 dans le logement correspondant. Le montage de la butée de verrouillage par insertion d'un doigt dans un logement s'ouvrant tangentiellement nécessite donc que l'opérateur pousse élastiquement le flasque vers le fût puis réalise une rotation du flasque par rapport au fût, autour de l'axe X, afin d'introduire le doigt dans le logement.

Après relâchement de la poussée sur le flasque, le ressort presse le doigt ou la patte 29 contre le logement correspondant, ce qui, avantageusement, contribue au maintien en position de la butée de verrouillage, et donc du flasque, dans la position assemblée. En outre, l'action du ressort permet de repousser et soulever légèrement le flasque dès que le doigt ou la patte 29 est dégagé de son logement, ce qui facilite le démontage, car cela permet à l'utilisateur de relâcher les clips de verrouillage 29, 33 et de se saisir du flasque à démonter.

Dans un mode de réalisation préféré, quatre ressorts 35 sont positionnés à la base de chaque demi-fût en étant équirépartis sur sa circonférence. Les ressorts 35 peuvent être intégrés dans le demi-fût, ou être des pièces rapportées, par exemple en matière plastique ou en métal.

La butée de verrouillage comporte de préférence un connecteur adapté pour un accouplement à un dérouleur, de préférence un dérouleur du type « Mobiway » (marque déposée) MOB ou « Mobiway » (marque déposée) ROL. Le connecteur est adapté au dérouleur.

Le connecteur peut être en particulier constitué par un ensemble de dents 32 conformées et agencées de manière à pouvoir engrener un pignon d'un tel dérouleur. L'ensemble de dents comporte de préférence entre 4 et 32 dents.

Selon la configuration du flasque réversible, le dérouleur peut être accouplé au connecteur ou directement sur le fût.

Dans un mode de réalisation, le fût comporte également un connecteur et l'accouplement du touret au dérouleur met en œuvre le connecteur de la butée de verrouillage dans une des première et deuxième configurations, par exemple dans la deuxième configuration, et met en œuvre le connecteur du fût dans l'autre des première et deuxième configurations.

Par ailleurs, le démontage provisoire d'un flasque réversible permet avantageusement de monter un enroulement torique de câble déjà constitué, ou « couronne de câble », par insertion sur le fût.

La couronne peut en particulier présenter une longueur, mesurée suivant l'axe de la couronne, supérieure à 5 cm et/ou inférieure à 30 cm, de préférence inférieure à 20 cm, de préférence inférieure à 10 cm. La masse d'une couronne peut être supérieure à 10 kg, supérieure à 15 kg, supérieure à 20 kg, et/ou inférieure à 35 kg.

Le câble peut comporter un ou plusieurs fils électriques isolés les uns des autres, en particulier trois fils. Le câble peut être en particulier du type 3G 1,5 ou 3G 2,5.

La couronne peut comporter plus de 10 m, plus de 30 m, plus de 50 m, voire plus de 100 m et/ou moins de 200 m de câble.

En fonction de la voie, une ou plusieurs couronnes peuvent être montées sur le touret. Le montage de plusieurs couronnes facilite leur stockage. En outre, quand une couronne a été dévidée, il est avantageusement de réduire la voie pour l'adapter à la ou aux couronnes encore montée(s) sur le touret. Pour un déroulement efficace du câble, il est en effet nécessaire que la couronne en cours de dévidage soit maintenue latéralement. Selon l'invention, le maintien latéral d'une couronne peut être assuré
- par les deux joues lorsqu'une seule couronne est montée sur le touret,
- par une joue et une couronne adjacente, lorsque seules deux couronnes sont montées sur le touret ou lorsque le touret porte plus de deux couronnes et que la couronne dévidée est adjacente à une joue, ou
- par deux couronnes adjacentes.

Selon l'invention, un flasque réversible peut être monté sur le fût « dans les deux sens », en étant inséré et fixé sur le fût par l'extrémité 19₂ du manchon du côté de la joue (flèche F₂) ou par l'extrémité 19₁ opposée (sens opposé à celui de la flèche F₂).

Les deux sens d'orientation O₁ et O₂ du flasque 14, correspondant à son orientation dans les première et deuxième configurations, respectivement, sont illustrés sur les figures 1 et 2.

Une orientation du flasque dans le premier sens conduit à une première configuration dans laquelle la joue est dans une position rapprochée du plan transversal médian P, le manchon étant à l'extérieur de la région d'enroulement entre les deux joues. Une orientation du flasque dans le deuxième sens conduit à une deuxième configuration dans laquelle la joue est dans une position écartée du plan transversal médian P, le manchon définissant, de préférence partiellement, la surface d'enroulement S entre les deux joues.

De préférence, chacun des flasques latéraux est un flasque réversible qui peut être fixé sur le fût en étant orienté suivant chacun des deux sens. Lorsque les deux flasques sont dans leur première configuration respective, la voie est minimale, comme illustré par le mode de réalisation « S » sur la figure 3. Lorsque les deux flasques sont dans leur deuxième configuration respective, la voie est maximale, comme illustré par la figure 2 et par le mode de réalisation « L » sur la figure 3. Lorsqu'un des flasques est dans sa première configuration et que l'autre flasque est dans sa deuxième configuration, la voie est moyenne, comme illustré par la figure 2 et par le mode de réalisation « M » sur la figure 3. Le touret peut ainsi présenter trois voies différentes.

Le fonctionnement du touret découle directement de la description qui précède.

Les deux demi-fûts sont fixés l'un à l'autre, de préférence clipsés l'un sur l'autre. De préférence, au moins un demi-fût comporte des pattes élastiques qui s'encliquettent dans des logements correspondants ménagés dans l'autre demi-fût, par simple rapprochement des deux demi-fûts selon l'axe X (voir figure 8A).

Chacun des flasques réversibles est ensuite monté selon la même procédure :
Le manchon du flasque réversible est glissé, suivant l'axe X, sur un tronçon d'extrémité du fût respectif, et poussé vers le plan transversal médian P jusqu'à entrer en butée avec ce tronçon d'extrémité. Selon que la première ou la deuxième configuration est choisie, les premières ou les deuxièmes zones élémentaires de manchon viennent alors épouser les zones élémentaires de fût, ce qui limite considérablement le jeu entre le tronçon d'extrémité du fût et le manchon. Le déplacement du flasque vers le plan transversal médian du fût est stoppé.

La distance entre la joue du manchon et le plan transversal médian est fonction de l'orientation du manchon.

Que le flasque soit inséré par l'une ou l'autre de ses extrémités axiales, le fût est accessible, à travers l'ouverture du flasque du côté opposé au plan transversal médian du fût. Selon l'invention, une butée de verrouillage est fixée sur le fût, de préférence par clipsage. Elle vient ainsi, avec le fût, prendre en sandwich le flasque réversible et l'immobiliser le long de l'axe X (figures 3 et 4).

Alternativement (figures 1 et 2), les pattes 29 fixées de manière permanente sur le fût viennent entrer élastiquement dans les logements 31.

La figure 8 illustre la fixation d'un flasque amovible 14 dans un mode de réalisation préféré. Des pattes 29 élastiques sont montées sur le demi-fût représenté. Sur la figure 8A, les pattes sont démontées, et ne sont donc pas représentées. Le flasque amovible 14 est poussé par l'opérateur sur le demi-fût jusqu'à entrer en butée avec le ressort 35 (figure 8B).

Le ressort 35 présente la forme d'une lame s'étendant circonférentiellement et, dans le mode de réalisation représenté, présente une protrusion axiale 37 (figure 8A). L'opérateur poursuit l'insertion du flasque amovible à l'encontre de la poussée du ressort jusqu'à ce que le flasque amovible soit en butée axiale sur le demi-fût (figure 8C). A cet instant, les pattes 29 pénètrent élastiquement dans les logements 31 et empêchent la désolidarisation du flasque amovible. La pression du ressort 35 améliore considérablement le maintien du flasque amovible, en supprimant tout jeu axial.

Pour démonter le flasque amovible 14, l'opérateur pousse sur les pattes 29 pour les dégager des logements 31. Le ressort 35 repousse alors le flasque amovible, ce qui facilite son démontage. Le deuxième flasque réversible est monté sur le fût comme le premier flasque, son orientation étant choisie en fonction de la voie souhaitée.

De préférence, une ou plusieurs couronnes de câble est/sont montées sur le touret avant assemblage du deuxième flasque réversible. Alternativement, dans un mode de réalisation qui n'est pas préféré, le deuxième flasque peut être fixé sur le fût, puis le câble enroulé sur le touret.

Le câble peut être en particulier un câble électrique.

La bobine peut être elle-même montée sur un dérouleur.

Un flasque ou les deux flasques peu(ven)t être démonté(s) pour modifier la voie, par exemple pour ajouter une couronne de câble ou pour adapter la voie au nombre de couronnes encore sur le touret. A cet effet, il suffit d'appuyer sur les boutons 30 ou 33 immobilisant la butée de verrouillage pour désolidariser la butée de verrouillage. Le flasque réversible peut alors être extrait, retourné, puis remonté.

Après utilisation, le touret peut être entièrement ou partiellement démonté. Son encombrement peut être ainsi considérablement réduit.

La forme double-conique de la surface intérieure des manchons permet avantageusement d'empiler les flasques avec un encombrement réduit.

Le démontage permet également de remplacer une des pièces constituant le touret, en particulier une pièce ayant été endommagée. La quantité de déchets généré est ainsi limitée.

Comme cela apparaît clairement à présent, un touret selon l'invention présente une capacité d'adaptation remarquable.

Bien entendu, l'invention n'est pas limitée au mode de réalisation décrit et représenté, mais seulement limitée par la portée des revendications jointes.

En particulier, chacune des caractéristiques décrites précédemment pour un flasque réversible est optionnellement applicable à chaque flasque réversible lorsque le touret comporte deux flasques réversibles. La forme des joues n'est pas limitée, toutes les formes de joue connues étant envisagées.

De préférence, comme dans les modes de réalisation préférés décrits en détail, un flasque réversible, de préférence chaque flasque réversible, vient en butée dans les deux orientations, c'est-à-dire qu'il soit monté par une extrémité du manchon ou par l'extrémité opposée. Le long de l'axe X, la position du flasque réversible est donc unique.

Cependant, dans un mode de réalisation, un flasque réversible, de préférence chaque flasque réversible peut être fixé, d'un même côté du plan transversal médian, dans deux ou plus de deux positions, ce qui permet de multiplier les voies possibles.

Dans un mode de réalisation non représenté, la joue d'un flasque réversible n'est pas positionnée à une extrémité axiale du manchon.

Le touret conforme à l'invention est adapté à s'interfacer avec des accessoires qui visent à en améliorer l'usage.

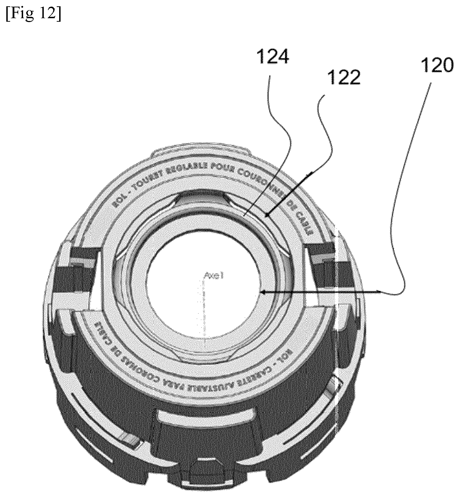

A cet effet, comme le montre la figure 12, le fût 12 présente à chacune de ses deux extrémités une interface comportant, d'une part, une zone de contact 120 et d'autre part, une surface extérieur 122.

Dans un mode de réalisation préféré, la zone de contact 120 et la surface extérieure 122 sont de forme circulaire. Cela permet de maintenir un accessoire en position une fois qu'il est déverrouillé de l'interface du fût 12.

Dans un mode de réalisation préféré, la zone de contact 120 comporte un épaulement 124 ininterrompu sur toute la circonférence d'un cercle. Cela permet de renforcer la rigidité de l'interface du fût 12. Cela permet en outre de s'affranchir d'utiliser des matériaux ayant une rigidité supérieure à ceux utilisés habituellement et de ne pas nécessiter d'ajouter d'élément de rigidification, ni de modifier la matière utilisée.

## Revendications

1. Touret (10) comportant un fût (12) d'axe X et deux flasques latéraux (14) qui, dans une position assemblée du touret, sont fixés coaxialement audit fût, chaque flasque latéral comportant une joue s'étendant sensiblement perpendiculairement à l'axe X dans ladite position assemblée, les joues des deux flasques latéraux délimitant une surface d'enroulement (E) pour un câble,
au moins un desdits flasques latéraux, dit « flasque réversible », étant assemblable sur un tronçon d'extrémité (12d, 12g) du fût selon des première et deuxième configurations dans lesquelles la position de la joue (20) dudit flasque réversible le long de l'axe X est différente, des premier et deuxième volumes différents étant ainsi ménagés pour l'enroulement du câble entre les deux flasques latéraux dans les première et deuxième configurations, respectivement,
le passage de la première configuration à la deuxième configuration incluant un retournement du flasque réversible
**caractérisé en ce que** le touret comporte une butée de verrouillage (16) qui est fixée à travers le flasque,
dans les première et deuxième configurations, sur le fût pour maintenir le flasque réversible immobile axialement sur le fût, ledit flasque réversible étant pris en sandwich entre une butée formée par le fût et la butée de verrouillage.

2. Touret selon l'une quelconque des revendications précédentes, dans lequel le flasque réversible comporte un manchon d'axe X dans lequel le tronçon d'extrémité du fût est partiellement logé dans les première et deuxième configurations du flasque réversible, la surface extérieure du manchon définissant au moins partiellement ladite surface d'enroulement (E) dans la première configuration ou dans la deuxième configuration.

3. Touret selon la revendication immédiatement précédente, dans lequel le tronçon d'extrémité du fût définit une surface extérieure (Se₁₂) s'étendant selon une enveloppe de fût (C) présentant la forme d'un cône d'axe X dont le sommet est du côté opposé au plan transversal médian du fût (P) par rapport au tronçon d'extrémité du fût, et le manchon présente une surface intérieure (Si₁₈) conformée de manière à s'étendre selon ladite enveloppe de fût (C) dans les première et deuxième configurations.

4. Touret selon la revendication immédiatement précédente, dans lequel la surface extérieure (Se₁₂) du tronçon d'extrémité du fût définit une pluralité de zones élémentaires de fût (Z) s'étendant selon ladite enveloppe de fût (C) et régulièrement répartis autour de l'axe X, et
le manchon définit une pluralité de premières zones élémentaires de manchon (Z₁) et une pluralité de deuxièmes zones élémentaires de manchon (Z₂), chaque première zone élémentaire de manchon étant configurée pour prendre appui sur une zone élémentaire de fût respective dans la première configuration, chaque deuxième zone élémentaire de manchon étant configurée pour prendre appui sur une zone élémentaire de fût respective dans la deuxième configuration.

5. Touret selon la revendication immédiatement précédente, dans lequel,
dans la première configuration, aucune deuxième zone élémentaire de manchon ne prend appui sur une zone élémentaire de fût, et
dans la deuxième configuration, aucune première zone élémentaire de manchon ne prend appui sur une zone élémentaire de fût.

6. Touret selon l'une quelconque des deux revendications immédiatement précédentes, dans lequel les premières et deuxièmes zones élémentaires de manchon se succèdent, en alternance, autour de l'axe (X) du manchon.

7. Touret selon l'une quelconque des revendications précédentes, dans lequel la butée de verrouillage (16), dans les première et deuxième configurations, prend appui sur des deuxième (19₂) et première (19₁) extrémités axiales du manchon, respectivement.

8. Touret selon la revendication 7, dans lequel la butée de verrouillage (16) comporte :
- une griffe (28) qui, dans les première et deuxième configurations, est insérée élastiquement dans un logement correspondant du fût, et
- un bouton (30) couplé à la griffe de manière qu'une pression manuelle sur ledit bouton dégage ladite griffe dudit logement.

9. Touret selon l'une quelconque des revendications 7 et 8, comportant des moyens de fixation (29,31) de ladite butée de verrouillage sur le flasque réversible, lesdits moyens de fixation étant actifs lorsque la butée de verrouillage (16) est fixée sur le fût dans une des première et deuxième configurations et lorsque la butée de verrouillage (16) n'est pas fixée sur le fût.

10. Touret selon l'une quelconque des revendications 1 à 6, dans lequel la butée de verrouillage (16) est fixée de manière permanente sur le fût et, dans les première et deuxième configurations, de manière désactivable sur le flasque réversible.

11. Touret selon l'une quelconque des revendications précédentes, comportant un ressort configuré de manière à repousser le flasque réversible, le long de l'axe X, de manière à l'écarter du plan transversal médian (P) du fût, dans au moins une des première et deuxième configurations.

12. Touret selon l'une quelconque des revendications précédentes, dans lequel chaque flasque, comporte un pare-chocs (26) périphérique sous la forme d'un repli du bord périphérique sur lui-même.

13. Touret selon l'une quelconque des revendications précédentes, dans lequel chacun des flasques latéraux est un flasque réversible.

14. Touret selon la revendication immédiatement précédente, dans lequel les deux flasques latéraux sont identiques.

15. Bobine comportant un touret selon l'une quelconque des revendications précédentes et un câble enroulé autour de la surface d'enroulement (E).

16. Dévidoir comportant un dérouleur et un touret selon l'une quelconque des revendications 1 à 14 monté sur le dérouleur, l'accouplement du flasque amovible du touret au dérouleur étant, selon la configuration du flasque amovible, sélectivement réalisé au moyen d'un connecteur (32) de la butée de verrouillage ou sur le fût.

17. Procédé pour modifier la surface d'enroulement (E) d'un touret selon l'une quelconque des revendications 1 à 14, le procédé comportant les étapes suivantes :
1) démontage d'un dit flasque réversible disposé dans une dite première configuration ;
2) retournement du flasque réversible et remontage du flasque réversible sur le fût dans une dite deuxième configuration.

## Patentansprüche

1. Trommel (10), enthaltend einen Kern (12) mit einer Achse X sowie zwei Seitenflansche (14), die, wenn sich die Trommel in einem zusammengebauten Zustand befindet, koaxial an dem Kern befestigt sind, wobei jeder Seitenflansch eine Wange enthält, die sich im besagten zusammengebauten Zustand im Wesentlichen senkrecht zu der Achse X erstreckt, wobei die beiden Seitenflansche eine Wickelfläche (E) für ein Kabel begrenzen,
wobei zumindest einer der Seitenflansche, der sogenannte "umkehrbare Flansch", an einem Endabschnitt (12d, 12g) des Kerns gemäß einer ersten und einer zweiten Konfiguration montierbar ist, in welchen die Position der Wange (20) des umkehrbaren Flansches entlang der Achse X unterschiedlich ist, wobei in der ersten und in der zweiten Konfiguration jeweils unterschiedliche erste und zweite Volumina für die Aufwicklung des Kabels zwischen den beiden Seitenflanschen geschaffen werden,
wobei der umkehrbare Flansch umgedreht werden muss, um von der ersten Konfiguration in die zweite Konfiguration zu wechseln,
**dadurch gekennzeichnet, dass** die Trommel einen Verriegelungsanschlag (16) enthält, der in der ersten und in der zweiten Konfiguration sich durch den Flansch hindurch erstreckend an dem Kern befestigt ist, um den umkehrbaren Flansch axial unbeweglich an dem Kern in Position zu halten, wobei der umkehrbare Flansch zwischen einem von dem Kern gebildeten Anschlag und dem Verriegelungsanschlag festgeklemmt ist.

2. Trommel nach einem der vorhergehenden Ansprüche, wobei der umkehrbare Flansch eine Hülse mit einer Achse X enthält, in welcher der Endabschnitt des Kerns, wenn sich der umkehrbare Flansch in der ersten bzw. in der zweiten Konfiguration befindet, teilweise aufgenommen ist, wobei in der ersten bzw. in der zweiten Konfiguration die Außenfläche der Hülse zumindest teilweise die Wickelfläche (E) definiert.

3. Trommel nach dem unmittelbar vorhergehenden Anspruch, wobei der Endabschnitt des Kerns eine Außenfläche (Se₁₂) definiert, die sich entlang einer Kernmantelfläche (C) erstreckt, welche die Form eines Kegels mit einer Achse X aufweist, dessen Scheitelpunkt in Bezug auf den Endabschnitt des Kerns auf der der Quermittelebene des Kerns (P) entgegengesetzten Seite liegt, und wobei die Hülse eine Innenfläche (Si₁₈) aufweist, die derart ausgebildet ist, dass sie sich in der ersten und der zweiten Konfiguration entlang der Kernmantelfläche (C) erstreckt.

4. Trommel nach dem unmittelbar vorhergehenden Anspruch, wobei die Außenfläche (Se₁₂) des Endabschnitts des Kerns eine Mehrzahl von Kern-Elementarzonen (Z) definiert, die sich entlang der Kernmantelfläche (C) erstrecken und gleichmäßig um die Achse X herum verteilt sind, und wobei die Hülse eine Mehrzahl von ersten Hülsen-Elementarzonen (Z₁) und eine Mehrzahl von zweiten Hülsen-Elementarzonen (Z₂) definiert, wobei jede erste Hülsen-Elementarzone dafür ausgelegt ist, in der ersten Konfiguration auf einer entsprechenden Kern-Elementarzone zur Anlage zu kommen, wobei jede zweite Hülsen-Elementarzone dafür ausgelegt ist, in der zweiten Konfiguration auf einer entsprechenden Kern-Elementarzone zur Anlage zu kommen.

5. Trommel nach dem unmittelbar vorhergehenden Anspruch, wobei
in der ersten Konfiguration keine zweite Hülsen-Elementarzone auf einer Kern-Elementarzone zur Anlage kommt, und
in der zweiten Konfiguration keine erste Hülsen-Elementarzone auf einer Kern-Elementarzone zur Anlage kommt.

6. Trommel nach einem der beiden unmittelbar vorhergehenden Ansprüche, wobei die ersten und die zweiten Hülsen-Elementarzonen um die Achse (X) der Hülse herum abwechselnd aufeinanderfolgen.

7. Trommel nach einem der vorhergehenden Ansprüche, wobei in der ersten und in der zweiten Konfiguration der Verriegelungsanschlag (16) jeweils auf entsprechenden zweiten (19₂) und ersten (19₁) Endabschnitten der Hülse zur Anlage kommt.

8. Trommel nach Anspruch 7, wobei der Verriegelungsanschlag (16) enthält:
- eine Klinke (28), die in der ersten und der zweiten Konfiguration in eine entsprechende Aufnahme des Kerns federnd eingreift, und
- einen Knopf (30), der derart mit der Klinke gekoppelt ist, dass ein auf den Knopf ausgeübter manueller Druck die Klinke aus der Aufnahme löst.

9. Trommel nach einem der Ansprüche 7 und 8, enthaltend Befestigungsmittel (29, 31) zur Befestigung des Verriegelungsanschlags an dem umkehrbaren Flansch, wobei die Befestigungsmittel wirksam sind, wenn in einer aus der ersten und der zweiten Konfiguration der Verriegelungsanschlag (16) an dem Kern befestigt ist, und wenn der Verriegelungsanschlag (16) nicht an dem Kern befestigt ist.

10. Trommel nach einem der Ansprüche 1 bis 6, wobei der Verriegelungsanschlag (16) permanent an dem Kern befestigt ist und, in der ersten und der zweiten Konfiguration, deaktivierbar an dem umkehrbaren Flansch befestigt ist.

11. Trommel nach einem der vorhergehenden Ansprüche, enthaltend eine Feder, die dafür ausgelegt ist, den umkehrbaren Flansch derart entlang der Achse X zu drücken, dass dieser in zumindest einer aus der ersten und der zweiten Konfiguration von der Quermittelebene (P) des Kerns weg bewegt wird.

12. Trommel nach einem der vorhergehenden Ansprüche, wobei jeder Flansch einen umlaufenden Stoßfänger (26) enthält, der in Form eines Umschlags des Umfangsrands auf sich selbst ausgebildet ist.

13. Trommel nach einem der vorhergehenden Ansprüche, wobei es sich bei jedem der Seitenflansche um einen umkehrbaren Flansch handelt.

14. Trommel nach dem unmittelbar vorgehenden Anspruch, wobei beide Seitenflansche identisch ausgebildet sind.

15. Spule, enthaltend eine Trommel nach einem der vorhergehenden Ansprüche und ein Kabel, das um die Wickelfläche (E) herumgewickelt ist.

16. Haspel, enthaltend einen Abroller und eine Trommel nach einem der Ansprüche 1 bis 14, die auf dem Abroller montiert ist, wobei die Verbindung zwischen dem abnehmbaren Trommelflansch und dem Abroller je nach Konfiguration des abnehmbaren Flansches wahlweise mittels eines Verbinders (32) des Verriegelungsanschlags oder direkt auf dem Kern hergestellt wird.

17. Verfahren zur Veränderung der Wickelfläche (E) einer Trommel nach einem der Ansprüche 1 bis 14, wobei das Verfahren die Schritte enthält, dass:
1) ein sogenannter umkehrbarer Flansch, der in einer ersten Konfiguration angeordnet ist, abmontiert wird;
2) der umkehrbare Flansch umgedreht wird und der umkehrbare Flansch in einer zweiten Konfiguration wieder auf dem Kern montiert wird.

## Claims

1. Drum (10) comprising an X-axis drum body (12) and two lateral flanges (14) which, in an assembled position of the drum, are coaxially attached to said drum, each lateral flange comprising a side plate that extends substantially perpendicularly to the X-axis in said assembled position, the side plates of the two lateral flanges delimiting a winding surface (E) for a cable,
at least one of said lateral flanges, referred to as a 'reversible flange', being assemblable on an end portion (12d, 12g) of the drum body according to first and second configurations in which the position of the side plate (20) of said reversible flange along the X-axis is different, different first and second volumes thus being provided for winding the cable between the two lateral flanges in the first and second configurations, respectively,
the transition from the first configuration to the second configuration including flipping the reversible flange over,
**characterised in that** the drum comprises a locking stop (16) which is attached through the flange, in the first and second configurations, to the drum body in order to hold the reversible flange on the drum body so as to be axially immovable, said reversible flange being sandwiched between a stop formed by the drum body and the locking stop.

2. Drum according to any of the preceding claims, wherein the reversible flange comprises an X-axis sleeve in which the end portion of the drum body is partially accommodated in the first and second configurations of the reversible flange, the outer surface of the sleeve at least partially defining said winding surface (E) in the first configuration or in the second configuration.

3. Drum according to the immediately preceding claim, wherein the end portion of the drum body defines an outer surface (Se₁₂) extending along a drum body shell (C) having the shape of an X-axis cone, the apex of which is on the side opposite the median transverse plane of the drum body (P) with respect to the end portion of the drum body, and the sleeve has an inner surface (Si₁₈) that is shaped so as to extend along said drum body shell (C) in the first and second configurations.

4. Drum according to the immediately preceding claim, wherein
the outer surface (Se₁₂) of the end portion of the drum body defines a plurality of basic drum body zones (Z) extending along said drum body shell (C) and being evenly distributed around the X-axis, and
the sleeve defines a plurality of first basic sleeve zones (Z₁) and a plurality of second basic sleeve zones (Z₂), each first basic sleeve zone being designed to bear against a respective basic drum body zone in the first configuration, each second basic sleeve zone being designed to bear against a respective basic drum body zone in the second configuration.

5. Drum according to the immediately preceding claim, wherein,
in the first configuration, no second basic sleeve zone bears against a basic drum body zone, and
in the second configuration, no first basic sleeve zone bears against a basic drum body zone.

6. Drum according to any of the two immediately preceding claims, wherein the first and second basic sleeve zones follow on from one another, in an alternating manner, around the axis (X) of the sleeve.

7. Drum according to any of the preceding claims, wherein the locking stop (16), in the first and second configurations, bears against second (19₂) and first (19₁) axial ends of the sleeve, respectively.

8. Drum according to claim 7, wherein the locking stop (16) comprises:
- a clip (28) which, in the first and second configurations, is resiliently inserted into a corresponding recess of the drum body, and
- a button (30) which is coupled to the clip such that a manual pressure on said button disengages said clip from said recess.

9. Drum according to any of claims 7 and 8, comprising attachment means (29, 31) for attaching said locking stop to the reversible flange, said attachment means being active when the locking stop (16) is attached to the drum body in one of the first and second configurations and when the locking stop (16) is not attached to the drum body.

10. Drum according to any of claims 1 to 6, wherein the locking stop (16) is permanently attached to the drum body and, in the first and second configurations, is detachably attached to the reversible flange.

11. Drum according to any of the preceding claims, comprising a spring that is designed to push the reversible flange away, along the X-axis, so as to move same away from the median transverse plane (P) of the drum body, into at least one of the first and second configurations.

12. Drum according to any of the preceding claims, wherein each flange comprises a peripheral bumper (26) in the form of a fold of the peripheral edge back onto itself.

13. Drum according to any of the preceding claims, wherein each of the lateral flanges is a reversible flange.

14. Drum according to any of the preceding claims, wherein the two lateral flanges are identical.

15. Spool comprising a drum according to any of the preceding claims and a cable wound around the winding surface (E).

16. Reel comprising an unwinder and a drum according to any of claims 1 to 14, mounted on the unwinder, the coupling of the immovable flange of the drum to the unwinder being, depending on the configuration of the removable flange, selectively achieved by means of a connector (32) of the locking stop or on the drum body.

17. Method for modifying the winding surface (E) of a drum according to any of claims 1 to 14, the method comprising the following steps:
1) removing a so-called reversible flange arranged in a so-called first configuration;
2) flipping the reversible flange over and refitting the reversible flange on the drum body in a so-called second configuration.
